# EUROPÄISCHE PATENTANMELDUNG

(11) **EP 0 598 203 A1**
(43) Veröffentlichungstag der Anmeldung: **25.05.1994**
(21) Anmeldenummer: 93115518.8
(22) Anmeldetag: 25.09.1993
(51) Int. Cl.: B60J 1/10

(54) **Isolierverglasung für eine Fensteröffnung eines Kraftfahrzeuges**

(30) Priorität: 14.11.1992 DE 4238490
(71) Anmelder: MERCEDES-BENZ AG, D-70327 Stuttgart (DE)
(72) Erfinder: Mühlhausen, Mark, Dipl.-Ing., D-70182 Stuttgart (DE); Uphues, Hans-Wilhelm, D-70106 Magstadt (DE)

(57) **Zusammenfassung**

Beim Stand der Technik weist eine Isolierverglasung zwei Scheiben aus Silikatglas auf, die struktursteif mit dem Karosserierahmen verbunden sind. Diese Silikatglasscheiben weisen ein relativ hohes Gewicht auf.

Eine der beiden Scheiben (3) besteht aus einem Kunststoff mit gegenüber dem Sicherheitsglas (2) verringertem Gewicht und ist mittels wenigstens zwei Befestigungsvorrichtungen (7) mit der anderen Scheibe (2) verbunden, die an dieser Scheibe in Abstand von einem äußeren Rand der Scheibe (2) angreifen.

Verwendung bei Kraftomnibussen und Schienenfahrzeugen.

## Beschreibung

Die Erfindung betrifft eine Isolierverglasung für eine Fensteröffnung eines Kraftfahrzeuges mit zwei in Abstand zueinander angeordneten Scheiben, von denen eine erste struktursteif mit einem Karosserierahmen im Bereich der Fensteröffnung verbunden ist und ein zertrümmerbares Sicherheitsglas aufweist.

Eine solche Isolierverglasung ist für einen Kraftomnibus bekannt. Die Isolierverglasung weist zwei aus einem Silikatglas hergestellte Sicherheitsscheiben auf, die mit dem Karosserierahmen des Kraftfahrzeuges verklebt sind. Dadurch erhöhen die Scheiben die Steifigkeit der Tragstruktur des Kraftfahrzeuges. Um im Notfall durch die Fensteröffnungen aussteigen zu können, ist das Silikatglas der Scheiben zertrümmerbar. Diese Scheiben weisen jedoch ein relativ hohes Gewicht auf.

Aufgabe der Erfindung ist es, eine Isolierverglasung der eingangs genannten Art zu schaffen, die ein verringertes Gewicht aufweist und dennoch im Notfall einen Ausstieg durch die Fensteröffnung zuläßt.

Diese Aufgabe wird dadurch gelöst, daß die zweite Scheibe aus einem Kunststoff mit gegenüber dem Sicherheitsglas verringertem Gewicht besteht und mittels wenigstens zwei Befestigungsvorrichtungen mit der ersten Scheibe verbunden ist, die an der ersten Scheibe in Abstand von einem äußeren Rand der Scheibe angreifen.

Durch die Verwendung einer Kunststoffscheibe reduziert sich das Gewicht der Isolierverglasung. Der Befestigungspunkt der zweiten Scheibe an der ersten Scheibe ist so gewählt, daß die erste Scheibe sich beim Zertrümmern auch im Bereich des Befestigungspunktes in kleine Scherben auflöst, so daß die Kunststoffscheibe nicht mehr an der ersten Scheibe gehalten wird und herabfällt oder aus der Fensteröffnung herausgestoßen werden kann.

In Ausgestaltung der Erfindung weisen die beiden Scheiben zur Aufnahme der Befestigungsvorrichtungen zueinander korrespondierende Bohrungen auf, die in der Betriebsposition der Scheiben koaxial ausgerichtet sind. Diese Bohrungen stellen die Befestigungspunkte der äußeren an der inneren Scheibe dar.

Weitere Vorteile und Merkmale der Erfindung ergeben sich aus den Unteransprüchen sowie aus der nachfolgenden Beschreibung einer Ausführungsform der Erfindung, die anhand der Zeichnungen dargestellt ist.
- Fig. 1: zeigt in perspektivischer Darstellung eine Ausführung einer erfindungsgemäßen Isolierverglasung im Bereich zweier Fensteröffnungen des Karosserierahmens eines Kraftfahrzeuges, wobei im Bereich der linken Fensteröffnung lediglich die Innenscheibe gezeigt ist und
- Fig. 2: einen Schnitt durch eine Ausführung einer Befestigungsvorrichtung nach Fig. 1, mittels der die äußere, aus Kunststoff bestehende Scheibe an der inneren Scheibe befestigt ist.

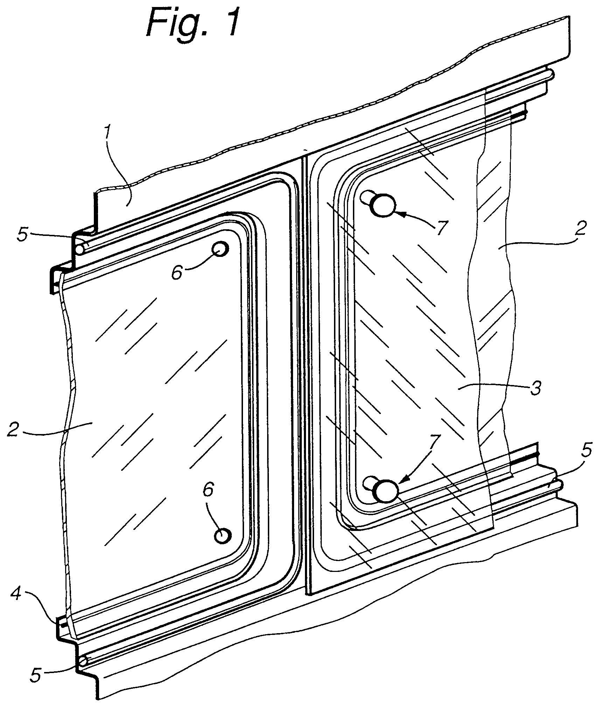

Die in Fig.1 nur ausschnittsweise dargestellten beiden Fensteröffnungen eines Kraftfahrzeuges, beispielsweise eines Schienenfahrzeuges oder eines Kraftomnibusses, werden durch einen Karosserierahmen (1) gebildet. Im Bereich der Ober- und der Unterseite der beiden Fensteröffnungen weist der Karosserierahmen (1) jeweils ein Profil auf, in dem die beiden Scheiben (2 und 3) der Isolierverglasung positionierbar sind. Die beiden Fensteröffnungen sind durch einen nicht näher bezeichneten Steg des Karosserierahmens (1) getrennt. Im Bereich der in Fig. 1 linken Fensteröffnung ist eine Innenscheibe (2) angeordnet. Diese besteht aus einem als Sicherheitsglas dienenden Silikatglas, das durch Schläge mit einem harten Gegenstand zertrümmerbar ist. Die Innenscheibe (2) ist im Bereich ihres umlaufenden Randes mit dem die Fensteröffnung begrenzenden Karosserierahmen (1) verklebt. Zur Verklebung wurde eine umlaufende Kleberaupe (4) gelegt. Durch diese Verklebung ist die Innenscheibe (2) struktursteif mit dem Karosserierahmen (1) verbunden, so daß sie Schubfelder aufnehmen kann und zur Versteifung der Tragstruktur des Karosserierahmens (1) beiträgt. In Abstand vom Rand der Innenscheibe (2) sind in der Innenscheibe (2) in der Nähe ihrer Eckbereiche vier Bohrungen (6) vorgesehen, von denen in Fig. 1 lediglich zwei gezeigt sind. Diese Bohrungen (6) dienen zur Aufnahme von im folgenden noch näher beschriebenen Befestigungsvorrichtungen (7), mittels derer eine Außenscheibe (3) an der Innenscheibe (2) fixierbar ist.

Die Außenscheibe (3) ist größer als die Innenscheibe (2) und überragt somit die Innenscheibe (2) in ihrer Höhe und ihrer Breite.Die Außenscheibe (3) ist aus einem durchsichtigen Kunststoff mit gegenüber dem Silikatglas der Innenscheibe (2) verringertem Gewicht hergestellt.Bei der Ausführung nach Fig.1 ist die Außenscheibe (3) aus Acrylglas hergestellt. In Fig.1 befindet sich die Außenscheibe (3) in ihrer Betriebsposition. Die Außenscheibe (3) weist zu den Bohrungen (6) der Innenscheibe (2) korrespondierende Bohrungen auf,deren Durchmesser dem Durchmesser der Bohrungen (6) entspricht und die in der Betriebsposition der Außenscheibe (3) zu den Bohrungen (6) der Innenscheibe (2) koaxial sind. Die Bohrungen der Außenscheibe (3) und die Bohrungen (6) der Innenscheibe (2) dienen zur Aufnahme einer Befestigungsvorrichtung (7), mittels der die Außenscheibe (3) an der Innenscheibe (2) fixierbar ist.

Diese Befestigungsvorrichtung (7) weist nach Fig. 2 einen Gewindebolzen (9) auf, der mit einem flachen Kopf (8) versehen ist und an seinem Fußende ein Außengewinde (10) aufweist. Zwischen den beiden Scheiben (2 und 3) ist eine Distanzhülse (15) vorgesehen, deren Höhe dem Abstand der beiden Scheiben (2 und 3) in ihrer Betriebsposition zueinander entspricht. In der in Fig. 2 gezeigten fixierten Position der Befestigungsvorrichtung (7) liegt der Kopf (8) an der Außenseite der Außenscheibe (3) an. Der Gewindebolzen (9) ragt durch beide Bohrungen der beiden Scheiben (2 und 3) hindurch. Auf der dem Innenraum des Kraftfahrzeuges zugerichteten Innenseite der Innenscheibe (2) ist auf das Außengewinde (10) des Gewindebolzens (9) eine Mutter (11) aufgeschraubt, so daß die Außenscheibe (3) gegen die Distanzhülse (15) gepreßt und so an der Innenscheibe (2) fixiert wird. Um die Bohrungen der beiden Scheiben (2 und 3) gegen Feuchtigkeit von außen oder aus dem Innenraum des Kraftfahrzeuges abzudichten, ist unter dem Kopf (8) des Gewindebolzens (9) eine Gummidichtung (14) angebracht. Unter der Mutter (11) ist eine Unterlegscheibe (12) vorgesehen, die ebenfalls mittels einer Gummidichtung (13) an der Innenseite der Innenscheibe (2) anliegt.

Um den zwischen der Innenscheibe (2) und der Außenscheibe (3) gebildeten Hohlraum abzudichten, ist eine aus Gummi hergestellte Hohlkammerdichtung (5) vorgesehen, die umlaufend um jede Fensteröffnung angeordnet ist. Wie aus Fig. 1 ersichtlich ist, dichtet diese Hohlkammerdichtung (5) die Außenscheibe (3) gegen den Karosserierahmen (1) ab.

Bei einer anderen Ausführungsform ist die Hohlkammerdichtung zwischen Innenscheibe (2) und Außenscheibe (3) angeordnet.

Durch die erfindungsgemaße Ausführung nach den Fig. 1 und 2 trägt zum einen die Innenscheibe (2) zur Versteifung des Karosserierahmens (1) bei. Zum anderen ist das Gewicht der Isolierverglasung durch die Verwendung einer Außenscheibe (3) aus Acrylglas um etwa 25% reduziert. Schließlich ist trotz der Verwendung einer aus Acrylglas hergestellten Außenscheibe (3) im Notfall in einfacher Weise ein Ausstieg aus der Fensteröffnung möglich. Dazu wird lediglich mittels eines harten Gegenstandes die Innenscheibe (2) zertrümmert, wodurch die Innenscheibe (2) auch im Bereich der Bohrungen (6) in kleine Scherben zerbricht. Die Befestigungsvorrichtung (7) und damit die Außenscheibe (3) hat somit keinen Halt mehr und fällt entweder von alleine aus der Fensteröffnung heraus oder sie kann durch eine einfache kurze Drückbewegung herausgestoßen werden.

## Patentansprüche

1. Isolierverglasung für eine Fensteröffnung eines Kraftfahrzeuges mit zwei in Abstand zueinander angeordneten Scheiben, von denen eine erste struktursteif mit einem Karosserierahmen im Bereich der Fensteröffnung verbunden ist und ein zertrümmerbares Sicherheitsglas aufweist,
**dadurch gekennzeichnet,**
daß die zweite Scheibe (3) aus einem Kunststoff mit gegenüber dem Sicherheitsglas verringertem Gewicht besteht und mittels wenigstens zwei Befestigungsvorrichtungen (7) mit der ersten Scheibe (2) verbunden ist, die an der ersten Scheibe (2) in Abstand von einem äußeren Rand der Scheibe (2) angreifen.

2. Isolierverglasung nach Anspruch 1,
**dadurch gekennzeichnet,**
daß die beiden Scheiben (2, 3) zur Aufnahme der Befestigungsvorrichtungen (7) zueinander korrespondierende Bohrungen (6) aufweisen, die in der Betriebsposition der Scheiben (2, 3) koaxial ausgerichtet sind.

3. Isolierverglasung nach Anspruch 1,
**dadurch gekennzeichnet,**
daß die Befestigungsvorrichtung (7) ein die Scheiben (2, 3) in Abstand zueinander haltendes Distanzstück (15) aufweist.

4. Isolierverglasung nach Anspruch 2,
**dadurch gekennzeichnet,**
daß die Befestigungsvorrichtung (7) einen durch die Bohrungen (6) der Scheiben (2, 3) hindurchragenden Gewindebolzen (9) aufweist, bei dem an einem Ende ein Kopf (8) vorgesehen und am anderen Ende eine Mutter (11) aufschraubbar ist.

5. Isolierverglasung nach Anspruch 4,
**dadurch gekennzeichnet,**
daß die Befestigungsvorrichtung (7) im Bereich des Kopfes (8) und im Bereich der Mutter (11) die Bohrungen (6) der Scheiben (2, 3) abdichtende Dichtungen (13, 14) aufweist.

6. Isolierverglasung nach Anspruch 1,
**dadurch gekennzeichnet,**
daß eine den Hohlraum zwischen den beiden Scheiben (2, 3) abdichtende, umlaufende Dichtung (5) vorgesehen ist, die zwischen Scheibe (3) und Karosserierahmen (1) oder zwischen Scheibe (3) und Scheibe (2) angeordnet ist.
